# EUROPEAN PATENT SPECIFICATION

(11) **EP 2 472 070 B1**
(45) Date of publication and mention of the grant of the patent: **23.05.2018**
(21) Application number: 11010281.1
(22) Date of filing: 29.12.2011
(51) Int. Cl.: F01D 25/24

(54) **Methods of manufacturing a gas turbine engine case and corresponding case**
Verfahren zum Herstellen eines Gasturbinenmotorgehäuses und ensprechendes Gehäuse
Méthodes de fabrication d'un carter de moteur à turbine à gaz et carter correspondant

(30) Priority: 30.12.2010 US 201061428797 P
(43) Date of publication of application: 04.07.2012
(73) Proprietor: Rolls-Royce Corporation, Indianapolis, IN 46225 (US)
(72) Inventor: Xu, Raymond, Ruiwen, Carmel, IN 46032 (US); Griffiths, George F., Southlake, TX 72092 (US); Green, Kenneth, Alan, Greenwood, IN 46143 (US); Iesalnieks, Andy H., Indianapolis, IN 46205 (US)
(74) Representative: Beyer, Andreas

(56) References cited:
- EP-A2- 1 967 693
- EP-A2- 2 039 882
- EP-A2- 2 208 865
- DE-A1- 10 116 452
- US-A- 5 106 012

## Description

### Field of the Invention

The present invention relates to gas turbine engines, and more particularly, to gas turbine engine cases.

### Background

Gas turbine engine cases remain an area of interest. Some existing systems have various shortcomings, drawbacks, and disadvantages relative to certain applications. Accordingly, there remains a need for further contributions in this area of technology.

Document EP 1 967 963 A2 describes a method of repairing a defect in a splitter fairing of a turbine engine. The defect is repaired by removing a forward portion of the splitter fairing and salvaging the remaining original portion of the splitter fairing. A replacement ring is provided and welded to the original portion. Material from the replacement ring is then removed to obtain a profile with essentially the profile of the splitter fairing before the defect occurred.

Document EP 2 039 882 A2 describes a further method of repairing a gas turbine engine casing. An annular portion of the engine casing is removed. An annular replacement portion is attached to the engine casing followed by inspection, re-welding and finishing of the casing.

Document EP 2 208 865 A2 describes a still further method of repairing a distorted component of a gas turbine engine. The distortion is identified in a first portion of an engine component. A second portion of the engine component, which behaves as a heat sink or a stiffener, is identified and removed from the first portion.

After repairing the distortion, the first portion is heat-treated and metallurgically joined to the second portion.

Document DE 101 16 452 A1 describes a gas turbine including a compressor, a combustor and a turbine for generating rotational power from the combustion gas. Cooling holes are provided in a region parallel to a rotating shaft of the turbine so that longitudinal intervals of the cooling holes are lengthened. A frame portion improves stiffness of an outlet.

### Summary

According to one method aspect, a method of manufacturing a gas turbine engine case according to claim 1 is provided. According to another aspect, a gas turbine engine case according to claim 10 is provided. According to a further method aspect, a method of manufacturing a gas turbine engine according to claim 14 is provided.

One embodiment of the present invention is a unique gas turbine engine case. Another embodiment is a unique method of manufacturing a gas turbine engine case. Other embodiments include apparatuses, systems, devices, hardware, methods, and combinations for gas turbine engine cases. Further embodiments, forms, features, aspects, benefits, and advantages of the present application will become apparent from the description and figures provided herewith.

### Brief Description of the Drawings

The description herein makes reference to the accompanying drawings wherein like reference numerals refer to like parts throughout the several views, and wherein:
- FIG. 1: schematically illustrates some aspects of a non-limiting example of a gas turbine engine in accordance with an embodiment of the present invention.
- FIG. 2: schematically illustrates some aspects of a non-limiting example of a near net shape gas turbine engine case in accordance with an embodiment of the present invention.
- FIG. 3: depicts some aspects of a non-limiting example of a scalloped near net shape ring in accordance with an embodiment of the present invention.
- FIG. 4: depicts some aspects of a non-limiting example of a plurality of near net shape rings formed as a unit in accordance with an embodiment of the present invention.
- FIG. 5: depicts some aspects of a non-limiting example of a near net shape gas turbine engine case in accordance with an embodiment of the present invention.

### Detailed Description

For purposes of promoting an understanding of the principles of the invention, reference will now be made to the embodiments illustrated in the drawings, and specific language will be used to describe the same. It will nonetheless be understood that no limitation of the scope of the invention is intended by the illustration and description of certain embodiments of the invention. In addition, any alterations and/or modifications of the illustrated and/or described embodiment(s) are contemplated as being within the scope of the present invention. Further, any other applications of the principles of the invention, as illustrated and/or described herein, as would normally occur to one skilled in the art to which the invention pertains, are contemplated as being within the scope of the present invention.

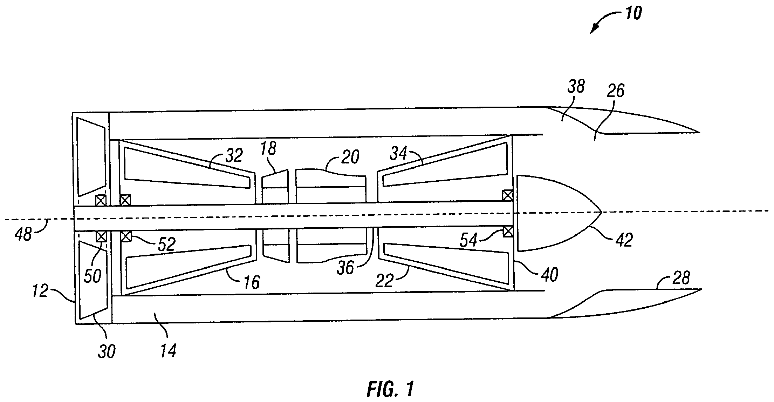

Referring to the drawings, and in particular FIG. 1, a non-limiting example of some aspects of a gas turbine engine 10 in accordance with an embodiment of the present invention is schematically depicted. In one form, gas turbine engine 10 is an aircraft propulsion power plant. In other embodiments, gas turbine engine 10 may be a land-based or marine engine. In one form, gas turbine engine 10 is a multi-spool turbofan engine. In other embodiments, gas turbine engine 10 may take other forms, and may be, for example, a turboshaft engine, a turbojet engine, a turboprop engine, or a combined cycle engine having a single spool or multiple spools.

As a turbofan engine, gas turbine engine 10 includes a fan system 12, a bypass duct 14, a compressor 16, a diffuser 18, a combustor 20, a turbine 22, a discharge duct 26 and a nozzle system 28. Bypass duct 14 and compressor 16 are in fluid communication with fan system 12. Diffuser 18 is in fluid communication with compressor 16. Combustor 20 is fluidly disposed between compressor 16 and turbine 22. In one form, combustor 20 includes a combustion liner (not shown) that contains a continuous combustion process. In other embodiments, combustor 20 may take other forms, and may be, for example and without limitation, a wave rotor combustion system, a rotary valve combustion system or a slinger combustion system, and may employ deflagration and/or detonation combustion processes.

Fan system 12 includes a fan rotor system 30. In various embodiments, fan rotor system 30 includes one or more rotors (not shown) that are powered by turbine 22. Bypass duct 14 is operative to transmit a bypass flow generated by fan system 12 to nozzle 28. Compressor 16 includes a compressor rotor system 32. In various embodiments, compressor rotor system 32 includes one or more rotors (not shown) that are powered by turbine 22. Each compressor rotor includes a plurality of rows of compressor blades (not shown) that are alternatingly interspersed with rows of compressor vanes (not shown). Turbine 22 includes a turbine rotor system 34. In various embodiments, turbine rotor system 34 includes one or more rotors (not shown) operative to drive fan rotor system 30 and compressor rotor system 32. Each turbine rotor includes a plurality of turbine blades (not shown) that are alternatingly interspersed with rows of turbine vanes (not shown).

Turbine rotor system 34 is drivingly coupled to compressor rotor system 32 and fan rotor system 30 via a shafting system 36. In various embodiments, shafting system 36 includes a plurality of shafts that may rotate at the same or different speeds and directions. In some embodiments, only a single shaft may be employed. Turbine 22 is operative to discharge an engine 10 core flow to nozzle 28. In one form, fan rotor system 30, compressor rotor system 32, turbine rotor system 34 and shafting system 36 rotate about an engine centerline 48. In other embodiments, all or parts of fan rotor system 30, compressor rotor system 32, turbine rotor system 34 and shafting system 36 may rotate about one or more other axes of rotation in addition to or in place of engine centerline 48. Fan rotor system 30 loads, compressor rotor system 32 loads, turbine rotor system 34 loads and shafting system 36 loads are supported and reacted by a plurality of bearing systems, e.g., including bearing systems 50, 52 and 54.

Discharge duct 26 extends between a discharge portion 40 of turbine 22 and engine nozzle 28. Discharge duct 26 is operative to direct bypass flow and core flow from a bypass duct discharge portion 38 and turbine discharge portion 40, respectively, into nozzle system 28. In some embodiments, discharge duct 26 may be considered a part of nozzle 28. Nozzle 28 is in fluid communication with fan system 12 and turbine 22. Nozzle 28 is operative to receive the bypass flow from fan system 12 via bypass duct 14, and to receive the core flow from turbine 22, and to discharge both as an engine exhaust flow, e.g., a thrust-producing flow. In other embodiments, other nozzle arrangements may be employed, including separate nozzles for each of the core flow and the bypass flow.

During the operation of gas turbine engine 10, air is drawn into the inlet of fan 12 and pressurized by fan 12. Some of the air pressurized by fan 12 is directed into compressor 16 as core flow, and some of the pressurized air is directed into bypass duct 14 as bypass flow, and is discharged into nozzle 28 via discharge duct 26. Compressor 16 further pressurizes the portion of the air received therein from fan 12, which is then discharged into diffuser 18. Diffuser 18 reduces the velocity of the pressurized air, and directs the diffused core airflow into combustor 20. Fuel is mixed with the pressurized air in combustor 20, which is then combusted. The hot gases exiting combustor 20 are directed into turbine 22, which extracts energy in the form of mechanical shaft power sufficient to drive fan system 12 and compressor 16 via shafting system 36. The core flow exiting turbine 22 is directed along an engine tail cone 42 and into discharge duct 26, along with the bypass flow from bypass duct 14. Discharge duct 26 is configured to receive the bypass flow and the core flow, and to discharge both as an engine exhaust flow, e.g., for providing thrust, such as for aircraft propulsion.

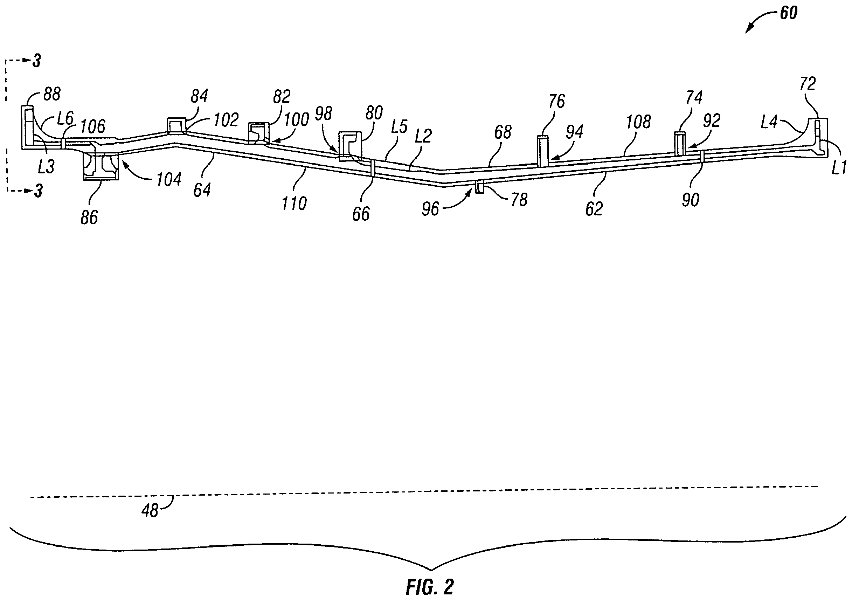

Referring to FIGS. 2-4, some aspects of a non-limiting example of an engine case 60 in accordance with an embodiment of the present invention are schematically illustrated. Engine 10 includes a plurality of engine cases, such as engine case 60 for housing and supporting various components of engine 10. In one form, engine case 60 houses and supports components of fan system 12. In other embodiments, case 60 may be configured to house other engine 10 components in addition to or in place of fan system 12 components. For example and without limitation, case 60 may be an inner case and/or an outer case for compressor 16, diffuser 18, combustor 20, turbine 22 and/or nozzle 28.

Engine case 60 is a near net shape unitary annular engine case, e.g., generally revolved about engine centerline 48. Internal lines in FIG. 2, e.g., lines L1, L2 and L3, illustrate the net shape features of engine case 60, whereas external lines, e.g., L4, L5 and L6, represent the raw near net shape of engine case 60, illustrating the material to be removed to yield the final net shape of engine case 60. Although depicted in cross-section, it will be understood that the depiction of FIG. 2 is schematic in nature, and that cross-hatching is not shown for purposes of clarity. In one form, engine case 60 is formed of two annular case sections 62 and 64 that are electron beam welded to each other at a weld joint 66 to form an intermediate unitary annular case structure 68. In some embodiments, one or more of annular case sections 62 and 64 may be formed of one or more plates that are rolled or otherwise formed to the desired dimensions, and then seam welded, e.g., from the forward end to the aft end, to form the case sections, and in some embodiments case structure 68. A plurality of near net shape rings 72, 74, 76, 78, 80, 82, 84, 86 and 88 are electron beam welded to intermediate unitary annular case structure 68, e.g., annular case sections 62 and 64, at weld joints 90, 92, 94, 96, 98, 100, 102, 104 and 106, to form unitary annular engine case 60. As illustrated in FIG. 2, some of the near net shape rings are electron beam welded to an outer surface 108 of case structure 68, some are electron beam welded to an inner surface 110 of case structure 68, and some are welded to end portions of case structure 68, e.g., at weld joints 90 and 106. In various embodiments, engine case 60 may be formed of any number of annular case sections and near net shape rings that are electron beam welded to each other at any number of weld joints to form a unitary annular engine case. In one form, the electron beam welds between the near net shape rings and case structure 68 extend circumferentially along (around) case structure 68. In other embodiments, the electron beam welds may extend only partially along case structure 68. In one form, the near net shape rings are 360° rings. In other embodiments, the near net shape rings may be any arc length. In addition, in some embodiments, near net shape linear or other segments may be electron beam welded to case structure 68, e.g., in an axial direction parallel to engine centerline 48.

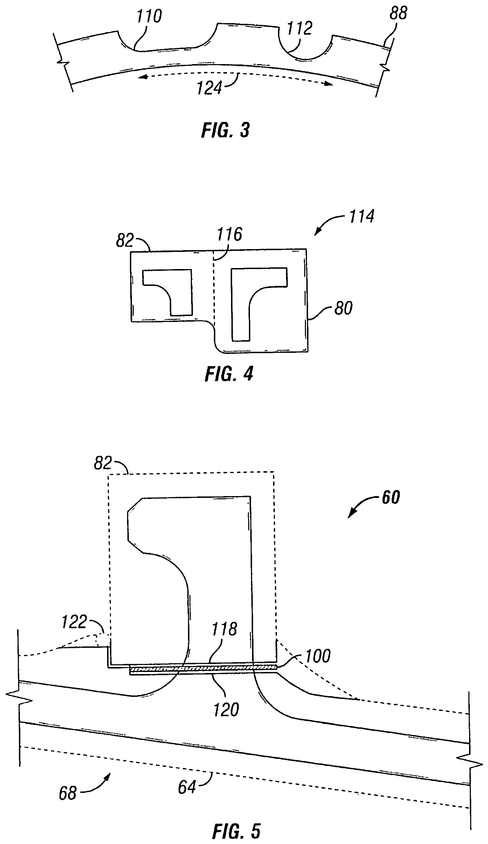

The near net shape rings may vary with the needs of the particular application. In one form, near net shape rings 72 and 88 are forged near net shape into the form of a flange, e.g., for attaching engine case 60 to other structures. In one form, near net shape rings 74, 80, 82 and 84 are formed, e.g., by forging, near net shape into the form of external stiffening rings configured to add stiffness to engine case 60. In one form, near net shape rings 78 and 86 are formed, e.g., by forging, near net shape into the form of internal retaining flanges configured to support engine 10 components positioned inside engine case 60. In one form, near net shape ring 76 is formed, e.g., by forging, near net shape into the form of an accessory attachment ring configured for attaching accessories externally to engine case 60. In one form, near net shape rings 76 and 88 are scalloped, e.g., in order to reduce weight. The scallops, e.g., depicted in FIG. 3 as scallops 110 and 112, may be formed by various means, including machining and/or may be formed, e.g., forged, near net shape. In one form, a plurality of near net shape rings may be formed as a unit, e.g., as a single forging, which may be subsequently cut into individual near net shape rings. For example, as depicted in FIG. 4, near net shape rings 80 and 82 may be formed as a unit 114, which may be cut along a parting line 116 to yield individual near net shape rings 80 and 82.

Engine case 60 may be manufactured by forming one or more annular case sections, e.g., annular case sections 62 and 64. In one form, case sections 62 and 64 are formed by forging into near net shape. In other embodiments, other forming techniques may be employed to yield a final shape and/or near net shape. Faying surfaces are machined on both annular case sections 62 and 64 at the location of intended weld joints, e.g., weld joint 66, and then annular case sections 62 and 64 are electron beam welded together at the faying surfaces to form unitary annular case structure 68. In some embodiments, annular case sections 62 and 64 may be temporarily tack welded together, e.g., to aid in final electron beam welding of the two sections together. Although described herein as being electron beam welded together prior to attaching near net shape rings 72, 74, 76, 78, 80, 82, 84, 86 and 88, it will be understood that in various embodiments, any one or more of near net shape rings 72, 74, 76, 78, 80, 82, 84, 86 and 88 may be attached to annular case sections 62 and/or 64 prior to electron beam welding annular case sections 62 and 64 together.

In one form, near net shape rings 72, 74, 76, 78, 80, 82, 84, 86 and 88 are formed by forging. In other embodiments, one or more of near net shape rings 72, 74, 76, 78, 80, 82, 84, 86 and 88 may be formed via another manufacturing technique, e.g., extrusion, casting, or machining of bar-stock and/or tube-stock, depending upon the needs of the application, e.g., including the desired size of the rings. In some embodiments, near net shape rings may be forged as rings, or formed as straight pieces, which are rolled into rings and then welded by electron beam, laser welding or flash butt welding (preferred). Faying surfaces are machined into each of near net shape rings 72, 74, 76, 78, 80, 82, 84, 86 and 88 and on case structure 68 at the locations intended for weld joints 90, 92, 94, 96, 98, 100, 102, 104 and 106. For example, referring to FIG. 5, a faying surface 118 is machined into near net shape ring 82, and a faying surface 120 is machined into annular case section 64 of intermediate case structure 68. In the depiction of FIG. 5, dashed lines generally represent raw near net shape surfaces, as formed e.g., by forging, whereas solid lines represent machined surfaces, including machined faying surfaces 118 and 120. In other embodiments, faying surfaces may not be machined into either of near net shape rings 72, 74, 76, 78, 80, 82, 84, 86 and 88, and case structure 68. In another manufacturing step, near net shape rings 72, 74, 76, 78, 80, 82, 84, 86 and 88 are tack welded onto intermediate case structure 68. For example, in the depiction of FIG. 5, near net shape ring 82 is tack welded to case structure 68 with a tack weld 122. In other embodiments, any one or more of near net shape rings 72, 74, 76, 78, 80, 82, 84, 86 and 88 may not be tack welded in place. Once tack welded into place on case structure 68, near net shape rings 72, 74, 76, 78, 80, 82, 84, 86 and 88 are electron beam welded to case structure 68. In one form, the electron beam welds extend circumferentially around case structure 68, e.g., along circumferential direction 124 (FIG. 3). In other embodiments, the electron beam welds may extend intermittently or only partially around case structure 68. Whereas near net shape rings 74, 76, 80, 82 and 84 are electron beam welded to outer surface 108 of case structure 68, near net shape rings 78 and 86 are electron beam welded to inner surface 110, and near net shape rings 72 and 88 are welded to ends of case structure 68 at the location of weld joints 90 and 106.

Embodiments of the present invention include a method of manufacturing a gas turbine engine case, comprising: forming a first annular case section; forging a first near net shape ring; machining a faying surface on at least one of the first near net shape ring and the first annular case section; and electron beam welding the first near net shape ring to the first annular case section at the faying surface.

In a refinement, the electron beam welding is performed circumferentially around the first annular case section.

In another refinement, the first annular case section is formed by forging.

In yet another refinement, the method further comprises: forming a second annular case section; machining a second faying surface on the second annular case section; machining a third faying surface on the first annular case section; and electron beam welding the first annular case section to the second annular case section at the third faying surface and the second faying surface.

In still another refinement, the first near net shape ring is forged into the form of a flange.

In yet still another refinement, the flange is electron beam welded to an end of the first annular case section.

In a further refinement, the method further comprises: forming a second near net shape ring; machining a fourth faying surface on at least one of the second near net shape ring and the first annular case section for joining the second near net shape to one of an inner surface and an outer surface of the first annular case section; and electron beam welding the second near net shape ring to the first annular case section at the one of the inner surface and the outer surface of the first annular case section.

In a yet further refinement, the method further comprises forming the first near net shape ring as a stiffening ring configured to add stiffness to the first annular case section.

In a still further refinement, the method further comprises forming the first near net shape ring as an accessory attachment ring.

In a yet still further refinement, the method further comprises forming scallops in the first near net shape ring.

In additional further refinement, the method further comprises: forging a plurality of near net shape rings in a single forging; and machining the single forging to separate the plurality of near net shape rings.

Embodiments of the present invention include a gas turbine engine case, comprising: a plurality of individual annular case sections electron beam welded to each other to form a unitary annular case structure; and at least one near net shape ring electron beam welded to the unitary annular case structure to form a unitary annular engine case.

In a refinement, the gas turbine engine case further comprises at least another near net shape ring electron beam welded to the unitary annular case structure.

In another refinement, the at least one near net shape ring is forged into the form of a flange.

In yet another refinement, the at least one near net shape ring is forged into the form of a stiffening ring.

In still another refinement, the at least one near net shape ring is forged into the form of an accessory attachment ring.

In yet still another refinement, the at least one near net shape ring is forged into the form of an internal retaining flange.

In a further refinement, an electron beam weld between the at least one near net shape ring and the unitary annular case structure extends circumferentially along the unitary annular case structure.

Embodiments of the present invention include a method for manufacturing a gas turbine engine, comprising: forming an engine case for at least one of a fan, a compressor, a diffuser, a combustor, a turbine and a nozzle of the gas turbine engine by: forming an first near net shape annular case section; forging a first near net shape ring; machining a faying surface on at least one of the first near net shape ring and the first near net shape annular case section; and electron beam welding the first near net shape ring to the first near net shape annular case section at the faying surface.

In a refinement, the method further comprises at least one of: forming a second near net shape annular case section; machining a second faying surface on the second near net shape annular case section; machining a third faying surface on the first near net shape annular case section; and electron beam welding the first near net shape annular case section to the second near net shape annular case section at the third faying surface and the second faying surface; and forming a second near net shape ring; machining a fourth faying surface on at least one of the second near net shape ring and the first near net shape annular case section or the second near net shape annular case section for joining the second near net shape to at least one of an inner surface and an outer surface of the first near net shape annular case section or the second near net shape annular case section; and electron beam welding the second near net shape ring to the first near net shape annular case section or the second near net shape annular case section at the at least one of the inner surface and the outer surface.

While the invention has been described in connection with what is presently considered to be the most practical and preferred embodiment, it is to be understood that the invention is not to be limited to the disclosed embodiment(s), but on the contrary, is intended to cover various modifications and equivalent arrangements included within the scope of the appended claims, which scope is to be accorded the broadest interpretation so as to encompass all such modifications and equivalent structures as permitted under the law. Furthermore it should be understood that while the use of the word preferable, preferably, or preferred in the description above indicates that feature so described may be more desirable, it nonetheless may not be necessary and any embodiment lacking the same may be contemplated as within the scope of the invention, that scope being defined by the claims that follow. In reading the claims it is intended that when words such as "a," "an," "at least one" and "at least a portion" are used, there is no intention to limit the claim to only one item unless specifically stated to the contrary in the claim. Further, when the language "at least a portion" and/or "a portion" is used the item may include a portion and/or the entire item unless specifically stated to the contrary.

## Claims

1. A method of manufacturing a gas turbine engine case (60), comprising:
forging to a near net shape (L4; L5; L6) a first annular case section (62); forging a first near net shape ring (72 to 88);
machining a faying surface (90 to 106; 118; 120) on at least one of the first near net shape ring and the first annular case section (62); and
electron beam welding the first near net shape ring (72 to 88) to the first annular case section (62) at the faying surface (90 to 106; 118; 120).

2. The method of claim 1, wherein the electron beam welding is performed circumferentially around the first annular case section.

3. The method of claim 1 or 2, further comprising:
forging to a near net shape (L5; L6) a second annular case section (64);
machining a second faying surface (66) on the second annular case section (64);
machining a third faying surface (66) on the first annular case section (62); and
electron beam welding the first annular case section (62) to the second annular case section (64) at the third faying surface (66) and the second faying surface (66).

4. The method of any one of claims 1 to 3, wherein the first near net shape ring (72; 88) is forged into the form of a flange, wherein the flange is preferably electron beam welded to an end (90; 106) of the first annular case section (62).

5. The method of any one of claims 1 to 4, further comprising:
forming a second near net shape ring (76; 78);
machining a fourth faying surface (94; 96) on at least one of the second near net shape ring (76; 78) and the first annular case section for joining the second near net shape ring to one of an inner surface (110) and an outer surface (108) of the first annular case section (62); and
electron beam welding the second near net shape ring to the first annular case section (62) at the one of the inner surface (110) and the outer surface (108) of the first annular case section (62).

6. The method of any one of claims 1 to 5, further comprising forming the first near net shape ring (74; 80; 82; 84) as a stiffening ring configured to add stiffness to the first annular case section (62).

7. The method of any one of claims 1 to 6, further comprising forming the first near net shape ring (76) as an accessory attachment ring.

8. The method of any one of claims 1 to 7, further comprising forming scallops (110; 112) in the first near net shape ring (76; 88).

9. The method of any one of claims 1 to 8, further comprising:
forging a plurality of near net shape rings in a single forging; and
machining the single forging to separate the plurality of near net shape rings.

10. A gas turbine engine case (60), comprising:
a plurality of individual near net shape annular case sections (62; 64) electron beam welded to each other to form a unitary annular case structure (68); and
at least one near net shape ring (72 to 88) electron beam welded to the unitary annular case structure (68) to form a unitary annular engine case (60).

11. The gas turbine engine case of claim 10, further comprising at least another near net shape ring electron beam welded to the unitary annular case structure.

12. The gas turbine engine case of claim 10 or 11, wherein the at least one near net shape ring is forged into the form of a flange; and/or
wherein the at least one near net shape ring is forged into the form of a stiffening ring (74; 80; 82; 84); and/or
wherein the at least one near net shape ring is forged into the form of an accessory attachment ring (76); and/or
wherein the at least one near net shape ring (78; 86) is forged into the form of an internal retaining flange.

13. The gas turbine engine case of any one of claims 10 to 12, wherein an electron beam weld between the at least one near net shape ring (72 to 88) and the unitary annular case structure (68) extends circumferentially (124) along the unitary annular case structure (68).

14. A method of manufacturing a gas turbine engine (10), comprising:
forming an engine case (60) for at least one of a fan (12), a compressor (16), a diffuser (18), a combustor (20), a turbine and a nozzle of the gas turbine engine by manufacturing the engine case according to any one of claims 1 to 9.

15. The method of claim 14, further comprising at least one of:
forging to a near net shape (L5; L6) a second annular case section (64); machining a second faying surface (66) on the second near net shape annular case section (64); machining a third faying surface (66) on the first near net shape annular case section (62); and electron beam welding the first near net shape annular case section to the second near net shape annular case section (64) at the third faying surface (66) and the second faying surface (66); and
forming a second near net shape ring (76; 78); machining a fourth faying surface (94; 96) on at least one of the second near net shape ring (76; 78) and the first near net shape annular case section (62) or the second near net shape annular case section (64) for joining the second near net shape ring to at least one of an inner surface (110) and an outer surface (108) of the first near net shape annular case section (62) or the second near net shape annular case section (64); and electron beam welding the second near net shape ring (76; 78) to the first near net shape annular case section (62) or the second near net shape annular case section (64) at the at least one of the inner surface (110) and the outer surface (108).

## Patentansprüche

1. Verfahren zum Herstellen eines Gasturbinentriebwerkgehäuses (60), umfassend:
Schmieden eines ersten ringförmigen Gehäuseabschnitts (62) in eine endformnahe Gestalt (L4; L5; L6);
Schmieden eines ersten endformnahen Rings (72 bis 88);
Spanen einer Passfläche (90 bis 106; 118; 120) auf dem endformnahen Ring und/oder dem ersten ringförmigen Gehäuseabschnitt (62); und
Elektronenstrahlschweißen des ersten endformnahen Rings (72 bis 88) an den ersten ringförmigen Gehäuseabschnitt (62) an der Passfläche (90 bis 106; 118; 120).

2. Verfahren nach Anspruch 1, bei dem das Elektronenstrahlschweißen umlaufend um den ersten ringförmigen Gehäuseabschnitt ausgeführt wird.

3. Verfahren nach Anspruch 1 oder 2, ferner umfassend:
Schmieden eines zweiten ringförmigen Gehäuseabschnitts (64) in eine endformnahe Gestalt (L5; L6);
Spanen einer zweiten Passfläche (66) auf dem zweiten ringförmigen Gehäuseabschnitt (64);
Spanen einer dritten Passfläche (66) auf dem ersten ringförmigen Gehäuseabschnitt (62); und
Elektronenstrahlschweißen des ersten ringförmigen Gehäuseabschnitts (62) an den zweiten ringförmigen Gehäuseabschnitt (64) an der dritten Passfläche (66) und der zweiten Passfläche (66).

4. Verfahren nach einem der Ansprüche 1 bis 3, bei dem der erste endformnahe Ring (72; 88) in die Form eines Flansches geschmiedet wird, wobei der Flansch vorzugsweise an ein Ende (90; 106) des ersten ringförmigen Gehäuseabschnitts (62) elektronenstrahlgeschweißt wird.

5. Verfahren nach einem der Ansprüche 1 bis 4, ferner umfassend:
Bilden eines zweiten endformnahen Rings (76; 78);
Spanen einer vierten Passfläche (94; 96) auf dem zweiten endformnahen Ring (76; 78) und/oder dem ersten ringförmigen Gehäuseabschnitt, um den zweiten endformnahen Ring mit einer Innenfläche (110) oder einer Außenfläche (108) des ersten ringförmigen Gehäuseabschnitts (62) zu verbinden; und
Elektronenstrahlschweißen des zweiten endformnahen Rings an den ersten ringförmigen Gehäuseabschnitt (62) an der Innenfläche (110) oder der Außenfläche (108) des ersten ringförmigen Gehäuseabschnitts (62).

6. Verfahren nach einem der Ansprüche 1 bis 5, das ferner ein Bilden des ersten endformnahen Rings (74; 80; 82; 84) als einen Versteifungsring umfasst, der dazu ausgebildet ist, den ersten ringförmigen Gehäuseabschnitt (62) zu versteifen.

7. Verfahren nach einem der Ansprüche 1 bis 6, das ferner ein Bilden des ersten endformnahen Rings (76) als einen Zubehörbefestigungsring umfasst.

8. Verfahren nach einem der Ansprüche 1 bis 7, das ferner ein Bilden von Bögen (110; 112) in dem ersten endformnahen Ring (76; 88) umfasst.

9. Verfahren nach einem der Ansprüche 1 bis 8, ferner umfassend:
Schmieden mehrerer endformnaher Ringe in einem einzigen Schmiedeteil; und
spanendes Bearbeiten des einzigen Schmiedeteils, um die mehreren endformnahen Ringen zu trennen.

10. Gasturbinentriebwerkgehäuses (60), umfassend:
mehrere einzelne endformnahe ringförmige Gehäuseabschnitte (62; 64), die miteinander elektronenstrahlverschweißt sind, um eine einheitliche ringförmige Gehäusestruktur (68) zu bilden; und
wenigstens einen endformnahen Ring (72 bis 88), der mit der einheitlichen ringförmigen Gehäusestruktur (68) elektronenstrahlverschweißt ist, um ein einheitliches ringförmiges Triebwerksgehäuse (60) zu bilden.

11. Gasturbinentriebwerkgehäuse nach Anspruch 10, das ferner wenigstens einen weiteren endformnahen Ring umfasst, der mit der einheitlichen ringförmigen Gehäusestruktur elektronenstrahlverschweißt ist.

12. Gasturbinentriebwerkgehäuse nach Anspruch 10 oder 11, wobei der wenigstens eine endformnahe Ring in die Form eines Flansches geschmiedet ist; und/oder
wobei der wenigstens eine endformnahe Ring in die Form eines Versteifungsrings (74; 80; 82; 84) geschmiedet ist; und/oder
wobei der wenigstens eine endformnahe Ring in die Form eines Zubehörbefestigungsrings (76) geschmiedet ist; und/oder
wobei der wenigstens eine endformnahe Ring (78; 86) in die Form eines inneren Halteflansches geschmiedet ist.

13. Gasturbinentriebwerkgehäuse nach einem der Ansprüche 10 bis 12, wobei eine Elektronenstrahlverschweißung zwischen dem wenigstens einen endformnahen Rings (72 bis 88) und der einheitlichen ringförmigen Gehäusestruktur (68) sich umlaufend (124) entlang der einheitlichen ringförmigen Gehäusestruktur (68) erstreckt.

14. Verfahren zum Herstellen eines Gasturbinentriebwerks (10), umfassend:
Bilden eines Triebwerkgehäuses (60) für einen Fan (12) und/oder einen Kompressor (16) und/oder einen Diffusor (18) und/oder eine Brennkammer (20) und/oder eine Turbine und/oder eine Düse des Gasturbinentriebwerks durch Herstellen des Triebwerkgehäuses gemäß einem der Ansprüche 1 bis 9.

15. Verfahren nach Anspruch 14, ferner umfassend:
Schmieden eines zweiten ringförmigen Gehäuseabschnitts (64) in eine endformnahe Gestalt (L5; L6); Spanen einer zweiten Passfläche (66) auf dem zweiten endformnahen ringförmigen Gehäuseabschnitt (64); Spanen einer dritten Passfläche (66) auf dem ersten endformnahen ringförmigen Gehäuseabschnitt (62); und Elektronenstrahlschweißen des ersten endformnahen ringförmigen Gehäuseabschnitts an den zweiten endformnahen ringförmigen Gehäuseabschnitt (64) an der dritten Passfläche (66) und der zweiten Passfläche (66); und/oder
Bilden eines zweiten endformnahen Rings (76; 78); Spanen einer vierten Passfläche (94; 96) auf dem zweiten endformnahen Ring (76; 78) und/oder dem ersten endformnahen ringförmigen Gehäuseabschnitt (62) oder dem zweiten endformnahen ringförmigen Gehäuseabschnitt (64), um den zweiten endformnahen Ring mit einer Innenfläche (110) und/oder einer Außenfläche (108) des ersten endformnahen ringförmigen Gehäuseabschnitts (62) oder des zweiten endformnahen ringförmigen Gehäuseabschnitts (64) zu verbinden; und Elektronenstrahlschweißen des zweiten endformnahen Rings (76; 78) an den ersten endformnahen ringförmigen Gehäuseabschnitt (62) oder den zweiten endformnahen ringförmigen Gehäuseabschnitt (64) an der Innenfläche (110) und/oder der Außenfläche (108).

## Revendications

1. Procédé de fabrication d'un carter (60) de moteur à turbine à gaz, comprenant :
le forgeage à une forme près des cotes (L4 ; L5 ; L6) d'une première section annulaire (62) de carter ;
le forgeage d'une première collerette à une forme près des cotes (72 à 88) ;
l'usinage d'une surface d'accostage (90 à 106 ; 118 ; 120) sur au moins une de la première collerette à une forme près des cotes et de la première section annulaire (62) de carter ; et
le soudage par faisceau d'électrons de la première collerette à une forme près des cotes (72 à 88) à la première section annulaire (62) de carter au niveau de la surface d'accostage (90 à 106 ; 118 ; 120).

2. Procédé selon la revendication 1, dans lequel le soudage par faisceau d'électrons est exécuté circonférentiellement autour de la première section annulaire de carter.

3. Procédé selon la revendication 1 ou 2, comprenant en outre :
le forgeage à une forme près des cotes (L5 ; L6) d'une deuxième section annulaire (64) de carter ;
l'usinage d'une deuxième surface d'accostage (66) sur la deuxième section annulaire (64) de carter ;
l'usinage d'une troisième surface d'accostage (66) sur la première section annulaire (62) de carter ; et
le soudage par faisceau d'électrons de la première section annulaire (62) de carter à la deuxième section annulaire (64) de carter au niveau de la troisième surface d'accostage (66) et de la deuxième surface d'accostage (66).

4. Procédé selon l'une quelconque des revendications 1 à 3, dans lequel la première collerette à une forme près des cotes (72 ; 88) est forgée à la forme d'un rebord, dans lequel le rebord est préférablement soudé par faisceau d'électrons à une extrémité (90 ; 106) de la première section annulaire (62) de carter.

5. Procédé selon l'une quelconque des revendications 1 à 4, comprenant en outre :
la formation d'une deuxième collerette à une forme près des cotes (76 ; 78) ;
l'usinage d'une quatrième surface d'accostage (94 ; 96) sur au moins une de la deuxième collerette à une forme près des cotes (76 ; 78) et de la première section annulaire de carter pour joindre la deuxième collerette à une forme près des cotes à une d'une surface intérieure (110) et d'une surface extérieure (108) de la première section annulaire (62) de carter ; et
le soudage par faisceau d'électrons de la deuxième collerette à une forme près des cotes à la première section annulaire (62) de carter au niveau de celle de la surface intérieure (110) et de la surface extérieure (108) de la première section annulaire (62) de carter.

6. Procédé selon l'une quelconque des revendications 1 à 5, comprenant en outre la formation de la première collerette à une forme près des cotes (74 ; 80 ; 82 ; 84) comme une collerette de raidissement configurée pour ajouter de la rigidité à la première section annulaire (62) de carter.

7. Procédé selon l'une quelconque des revendications 1 à 6, comprenant en outre la formation de la première collerette à une forme près des cotes (76) comme une collerette de fixation d'accessoires.

8. Procédé selon l'une quelconque des revendications 1 à 7, comprenant en outre la formation de festons (110 ; 112) dans la première collerette à une forme près des cotes (76 ; 88).

9. Procédé selon l'une quelconque des revendications 1 à 8, comprenant en outre :
le forgeage d'une pluralité de collerettes à une forme près des cotes en un forgeage unique ; et
l'usinage du forgeage unique pour séparer la pluralité de collerettes à une forme près des cotes.

10. Carter (60) de moteur à turbine à gaz, comprenant :
une pluralité de sections annulaires (62 ; 64) de carter à une forme près des cotes soudées par faisceau d'électrons les unes aux autres pour former une structure annulaire unitaire (68) de carter ; et
au moins une collerette à une forme près des cotes (72 à 88) soudée par faisceau d'électrons à la structure annulaire unitaire (68) de carter pour former un carter (60) annulaire unitaire de moteur.

11. Carter de moteur à turbine à gaz selon la revendication 10, comprenant en outre au moins une autre collerette à une forme près des cotes soudée par faisceau d'électrons à la structure annulaire unitaire de carter.

12. Carter de moteur à turbine à gaz selon la revendication 10 ou 11, dans lequel l'au moins une collerette à une forme près des cotes est forgée à la forme d'un rebord ; et/ou
dans lequel l'au moins une collerette à une forme près des cotes est forgée à la forme d'une collerette (74 ; 80 ; 82 ; 84) de raidissement ; et/ou
dans lequel l'au moins une collerette à une forme près des cotes est forgée à la forme d'une collerette (76) de fixation d'accessoires ; et/ou
dans lequel l'au moins une collerette à une forme près des cotes (78 ; 86) est forgée à la forme d'un rebord interne de retenue.

13. Carter de moteur à turbine à gaz selon l'une quelconque des revendications 10 à 12, dans lequel une soudure par faisceau d'électrons entre l'au moins une collerette à une forme près des cotes (72 à 88) et la structure annulaire unitaire (68) de carter s'étend circonférentiellement (124) le long de la structure annulaire unitaire (68) de carter.

14. Procédé de fabrication d'un moteur (10) à turbine à gaz, comprenant :
la formation d'un carter (60) de moteur pour au moins un(e) parmi un ventilateur (12), un compresseur (16), un diffuseur (18), une chambre de combustion (20), une turbine et une buse du moteur à turbine à gaz en fabriquant le carter de moteur selon l'une quelconque des revendications 1 à 9.

15. Procédé selon la revendication 14, comprenant au moins un(e) parmi :
le forgeage à une forme près des cotes (L5 ; L6) d'une deuxième section annulaire (64) de carter ; l'usinage d'une deuxième surface d'accostage (66) sur la deuxième section annulaire à une forme près des cotes (64) de carter ; l'usinage d'une troisième surface d'accostage (66) sur la première section annulaire à une forme près des cotes (62) de carter ; et le soudage par faisceau d'électrons de la première section annulaire à une forme près des cotes de carter à la deuxième section annulaire à une forme près des cotes (64) de carter au niveau de la troisième surface d'accostage (66) et de la deuxième surface d'accostage (66) ; et
la formation d'une deuxième collerette à une forme près des cotes (76 ; 78) ; l'usinage d'une quatrième surface d'accostage (94 ; 96) sur au moins une de la deuxième collerette à une forme près des cotes (76 ; 78) et de la première section annulaire à une forme près des cotes (62) de carter ou de la deuxième section annulaire à une forme près des cotes (64) de carter pour joindre la deuxième collerette à une forme près des cotes à au moins une d'une surface intérieure (110) et d'une surface extérieure (108) de la première section annulaire à une forme près des cotes (62) de carter ou de la deuxième section annulaire à une forme près des cotes (64) de carter ; et le soudage par faisceau d'électrons de la deuxième collerette à une forme près des cotes (76 ; 78) à la première section annulaire à une forme près des cotes (62) de carter ou à la deuxième section annulaire à une forme près des cotes (64) de carter au niveau de l'au moins une de la surface intérieure (110) et de la surface extérieure (108).
